# EUROPEAN PATENT SPECIFICATION

(11) **EP 1 690 760 B1**
(45) Date of publication and mention of the grant of the patent: **16.01.2008**
(21) Application number: 06002375.1
(22) Date of filing: 06.02.2006
(51) Int. Cl.: B60R 25/02

(54) **Lock mechanism**
Lenkschloss
Verrou de direction

(30) Priority: 10.02.2005 JP 2005035164
(43) Date of publication of application: 16.08.2006
(73) Proprietor: ALPHA CORPORATION, Yokohama-shi, Kanagawa-ken (JP)
(72) Inventor: Kurata, Takebumi, Yokohama-shi, Kanagawa-ken (JP); Ono, Takashi, Yokohama-shi, Kanagawa-ken (JP); Oikawa, Kazuaki, Yokohama-shi, Kanagawa-ken (JP); Tada, Masatoshi, Yokohama-shi, Kanagawa-ken (JP); Nagashima, Setsuko, Yokohama-shi, Kanagawa-ken (JP)
(74) Representative: Grünecker, Kinkeldey, Stockmair & Schwanhäusser Anwaltssozietät

(56) References cited:
- PATENT ABSTRACTS OF JAPAN vol. 2000, no. 11, 3 January 2001 (2001-01-03) & JP 2000 225923 A (FUJI HEAVY IND LTD; ALPHA CORP), 15 August 2000 (2000-08-15)
- PATENT ABSTRACTS OF JAPAN vol. 2003, no. 12, 5 December 2003 (2003-12-05) & JP 2004 345456 A (ALPHA CORP), 9 December 2004 (2004-12-09)

## Description

### [BACKGROUND OF THE INVENTION]

### 1. FIELD OF THE INVENTION

The present invention relates to a lock mechanism housing a lock body and a cam mechanism inside of a casing body

### 2. DESCRIPTION OF THE RELATED ART

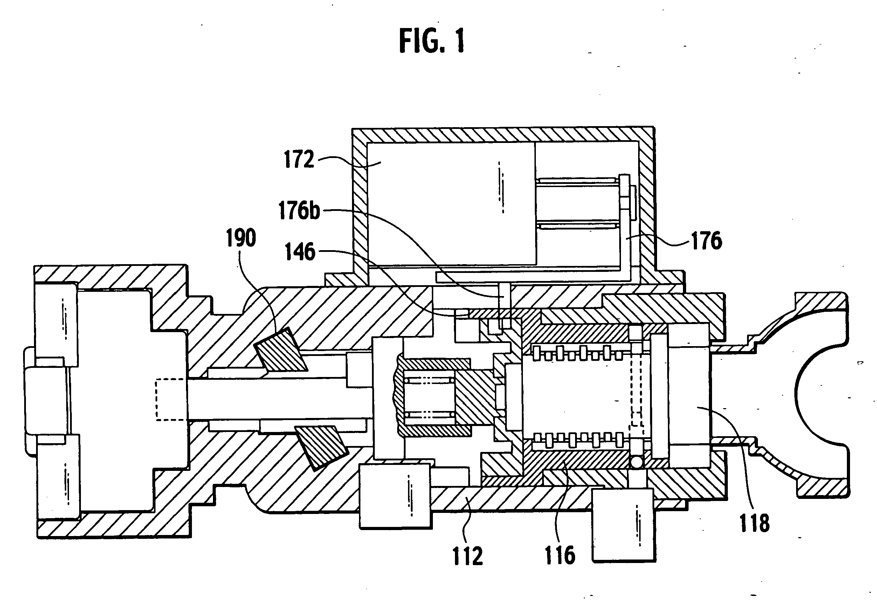

Art related to the application of this kind of lock mechanism to steering lock mechanisms is shown in FIG. 1 (See Japanese Unexamined Patent Application Publication No.: 2004-238840). In FIG. 1, a rotor 116 has an engagement portion 146 on its outer circumferential portion, and is held inside of a body 112 in a manner permitting circular movement. A cylinder 118 is held inside of the rotor 116 in a manner permitting circular movement, and circular movement thereof inside of the rotor 116 is enabled by insertion of a key. A lock shaft 190 is actuated by operation of circular movement of the cylinder 118, thereby preventing circular movement of a steering shaft. Lock members 176 and 176b engage the engagement portion 146 of the rotor 116 thereby preventing circular movement of the rotor 116. An electromagnetic solenoid 172 actuates the lock member 176. Due to such a configuration, the steering lock mechanism shown in FIG. 1 is made to control circular movement of the cylinder 118 by using an actuator and the lock members 176 and 176b to control circular movement of the rotor 116. Because of this, it is possible to execute control over circular movement of the cylinder, without the need for separate actuators or shift lever wired AT lock mechanisms and the like.

Another example of prior art system can be seen in JP-A-2000/225923.

### [SUMMARY OF THE INVENTION]

However, there have been cases of unauthorized unlocking of the steering lock as a result of damage carried out to the steering lock mechanism. Regarding steering lock mechanisms similar to the related art described above in particular, structure of which uses the electromagnetic solenoid 172 to control circular movement of the cylinder 118, the act of enabling steering by damaging the cover covering the electromagnetic solenoid, and yanking the lock member out from the spot where the cover is damaged to wrongfully achieve an unlocked state is conceivable.

The present invention was conceived with aim to solve the above problem suffered by the related art. It is an object of the present invention to provide a lock mechanism excelling in theft prevention characteristics, having high defensive functionality against destructive conduct.

In order to achieve the above object, an aspect of the present invention inheres in providing a cylindrical casing body, a unit housing portion, an insertion hole, a rotator, a lock lever, an operation controlling unit, and a unit cover. The unit housing portion is formed by an outer circumferential wall of the casing body and a unit housing of the casing body. The insertion hole is located in the outer circumferential wall forming the unit housing, and connects to a parts-storage compartment formed inside of the casing body. The rotator is supported inside of the parts-storage compartment in a manner allowing unhindered circular movement. The lock lever is provided in a manner protruding from the unit housing portion through the insertion hole to the parts-storage compartment and, when in a rotary-stop position, is positioned within a rotation path of a rotary control bar provided on the rotator to engage the rotary control bar and, when in a rotary-permit position, is positioned outside of the rotation path of the rotary control bar to disengage the rotary control bar. The operation controlling unit includes the lock lever, is housed inside of the unit housing portion, and selectively moves or maintains the lock lever in either the rotary-permit position or the rotary-stop position. The unit cover is formed and fitted to the shape of the inner face of the unit housing.

According to the aspect of the present invention, by establishing the unit cover, which is formed and fitted to the shape of the inner face of the unit housing, damage resistance, and thus theft prevention characteristics can be improved.

Also, in a situation having another structure installed at a prescribed location so as to be in close contact with the unit housing, it is also possible for the unit cover to be disposed on the inside of the region of the unit housing facing the outside space without closely contacting the separate structure.

According to the above constitution, by omitting disposal of the unit cover to regions to which destructive acts from the outside, in close contact with the structure, cannot be carried out, it is possible to improve theft prevention characteristics while preventing increases in manufacturing costs and weight. It is also acceptable to form the casing body from die cast zinc, and form the unit cover from a press processed iron plate.

According to the above constitution, by using a press processed iron plate for the unit cover, it is possible to improve theft prevention characteristics while preventing increases in manufacturing costs and weight.

### [BRIEF DESCRIPTION OF THE DRAWINGS]

FIG. 1 is a cross section view showing a related steering lock mechanism.
FIG. 2 is an exploded perspective view showing a steering lock mechanism according to a first embodiment of the present invention. ,
FIG. 3 is a full sectioned view of the steering lock mechanism according to the first embodiment of the present invention.
FIG. 4A and FIG. 4B are both diagrams showing a unit housing according to the first embodiment of the present invention, FIG. 4A being a perspective view, and FIG. 4B being an elevation view.
FIG. 5A and FIG. 5B are both diagrams showing the unit cover according to the first embodiment of the present invention, FIG. 5A being a perspective view, and FIG. 5B being an elevation view.
FIG. 6 is an elevation view showing the appearance of having the unit cover and a solenoid superimposed over the unit housing according to the first embodiment of the present invention.
FIG. 7 is a diagram showing the appearance of having a steering lock mechanism according to a second embodiment of the present invention superimposed over a steering column. ,
FIG. 8 is an exploded perspective view of the steering lock mechanism according to the second embodiment of the present invention.
FIG. 9 is a full sectioned view of the steering lock mechanism according to the second embodiment of the present invention.
FIG. 10A and FIG. 10B are both diagrams showing a unit housing according to the second embodiment of the present invention, FIG. 10A being a perspective view, and FIG. 10B being an elevation view.
FIG. 11A, FIG. 11B, FIG. 11C, FIG. 11D are all diagrams showing a unit cover according to the second embodiment of the present invention, FIG. 11A being a perspective view of a first unit cover, FIG. 11B being an elevation view of the first unit cover, FIG. 11C being a perspective view of a second unit cover, FIG. 11D being an elevation view of the second unit cover.

### [DESCRIPTION OF THE PREFERRED EMBODIMENT]

Hereinbelow, a first embodiment and a second embodiment of the present invention will be described based on the diagrams, in the following description of which identical or analogous symbols are used to identify identical or analogous parts therein. It should also be noted that the diagrams are for the purpose of illustration, and that relationships between thicknesses and planar dimensions, as well as proportions of layer thicknesses appearing therein differ from those in actuality.

### (First Embodiment)

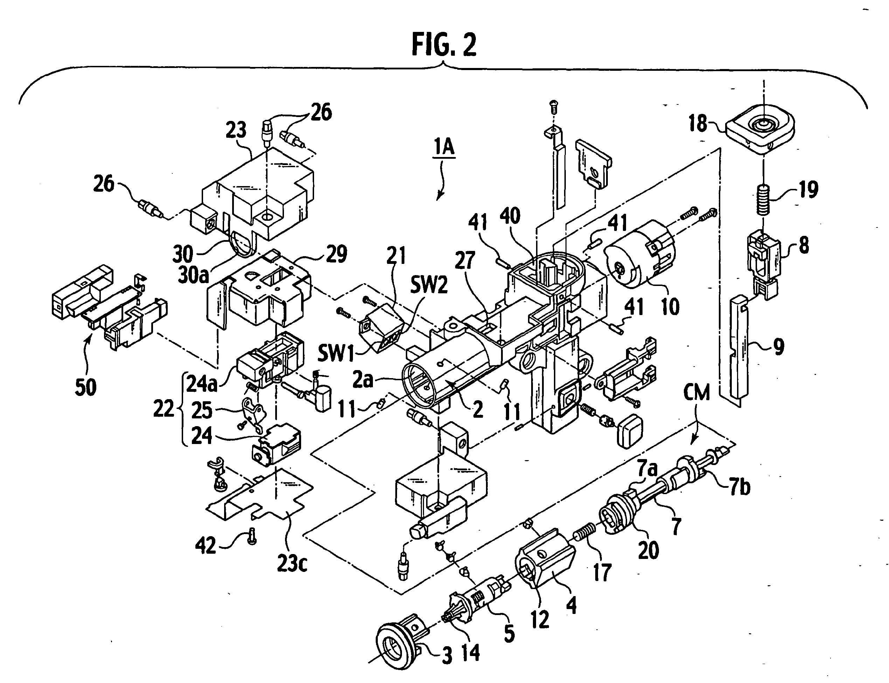

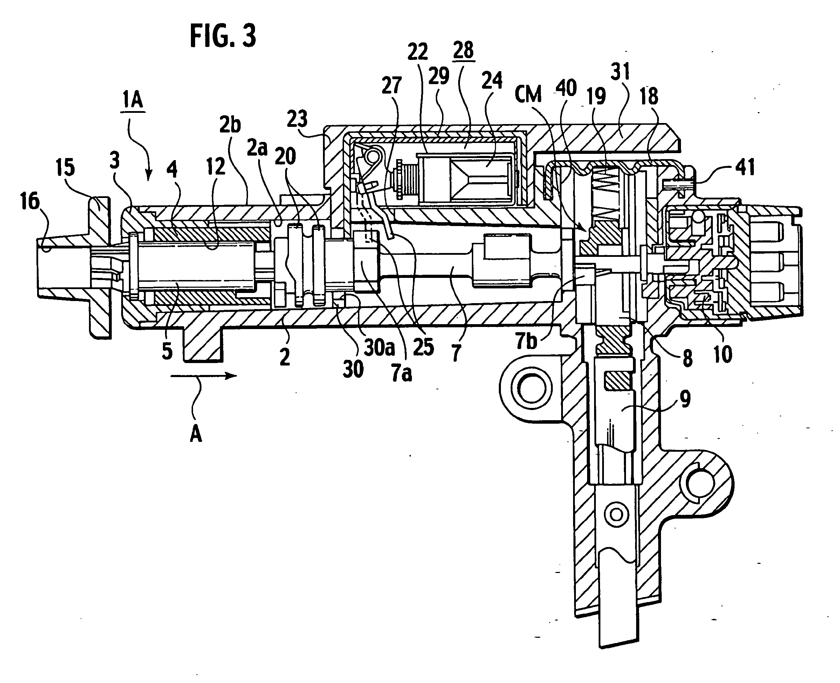

Hereinbelow will be described a first embodiment of the present invention based on the diagrams. FIG. 2 and FIG. 3 both show a steering lock mechanism of a vehicle having applied a lock mechanism according to the first embodiment of the present invention. FIG. 2 is an exploded perspective view of the steering lock mechanism, and FIG. 3 is a full sectioned view of the steering lock mechanism.

As shown in FIG. 2 and FIG. 3, a steering lock mechanism 1A is superimposed over the steering shaft (not shown) established on a vehicle, has a cylindrical casing body 2 formed of die cast zinc, inside of which a parts storage compartment 2a is formed in ah axial direction. Housed inside of the parts storage compartment parts storage compartment 2a are a cap 3, a housing case 4, a cylinder lock 5, which is the lock body, a rotator 7 having a cam member 7b on one end, a hanger rod 8, which is a member subjected to the cam, an end of an engagement rod 9, which is a lock member, an ignition switch 10, and the like.

The cap 3 is interposed in a space between an inner circumferential face of the casing body 2 and an outer circumferential face of the housing case 4 at a location in the periphery of an aperture of the parts storage compartment 2a of the casing body 2.

The housing case 4 is fixed in place by pins 11 and the like, and established inside of the housing case 4 is a cylinder housing compartment 12.

The roughly cylindrical cylinder lock 5 is housed inside of the cylinder housing compartment 12. A keyhole 14 is formed along the axial direction at the axial center point of the cylinder lock 5. An end side of the cylinder lock 5 protrudes from the casing body 2 to the outside, and to this protrusion site an operation knob 15 is fixed. Formed on the knob 15 is a keyhole inlet 16, which communicates into the keyhole 14. A cylinder key (not shown), which is a mechanical key, can be inserted into the keyhole 14 through the keyhole inlet 16. The cylinder lock 5 is free to be moved in the axial direction, with respect to the housing case 4, by a press operation, which is a first operation. And, the cylinder lock 5 is established in a manner permitting unhindered rotation around the axial center, with respect to the housing case 4, according to a rotate operation, which is a second operation. That is, the cylinder lock 5 may rotate only if a lock lever 25, which is mentioned below, is in an unlocked position.

The rotator 7 is supported in a manner permitting unhindered rotation with respect to the casing body 2, and one of its ends is coupled with the cylinder lock 5. The coupling of the rotator 7 and the cylinder lock 5 conveys only rotational movement and not movement in the axial direction A (See FIG. 3) of the cylinder lock 5. Interposed in the space between the rotator 7 and the cylinder lock 5 is a return spring 17, the spring force of which biases the cylinder lock 5 toward its initial-position side. Established thereonto and, as one with the other end side of the rotator 7 is the cam member 7b. The cam member 7b is coupled with the hanger rod 8, which is a member subjected to the cam. Simply stated, the hanger rod 8 and the cam member 7b of the rotator 7 constitute a cam mechanism CM, which converts rotary motion of the rotator 7 into linear motion, which is then conveyed to the engagement rod 9. The other end side of the engagement rod 9 is established in a manner permitting engagement and disengagement with a steering shaft (not shown). Simply stated, the engagement rod 9 moves over a space in between a lock position engaging the steering shaft (not shown), and a lock release position, according to the rotary position of the rotator 7. There applied to the hanger rod 8 is one end side of a spring 19, the spring force of which biases the engagement rod 9 toward its initial-position side.

There formed on the site that the hanger rod 8 of the casing body 2 faces, is an aperture portion 40 of the parts storage compartment 2a. The aperture portion 40 is covered by a lid 18. The lid 18 is fixed to the casing body 2 by a fixing pin 41, which is a means of fixation for the lid. The other end side of the spring 19 is applied to the lid 18.

Established protrusively on the rotator 7 is a half circular-disk shaped rotary control bar 7a, as well as a break-in prevention block portion 20, which is established, at two locations on the rotator 7, on the cylinder lock 5 side from the rotary control bar 7a, in a manner protruding in the direction of the outer circumference. An outer circumferential edge face of the break-in prevention block portion 20 is located at a spot proximal to an inner circumferential face of the parts storage compartment 2a of the casing body 2.

Fixed on the outer circumferential face of the casing body 2 are a switch unit 21 and a solenoid unit 22, which is an operation controlling means.

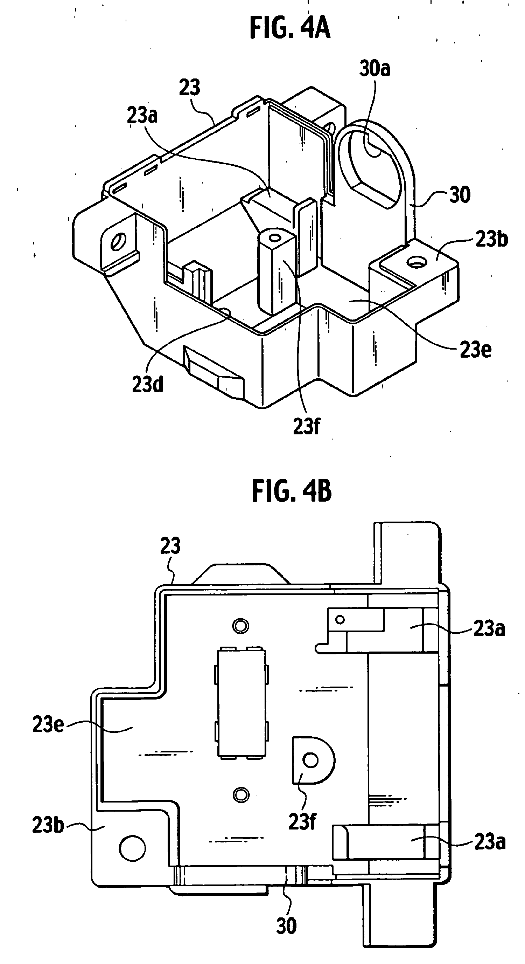

The switch unit 21 provides a key insertion detection switch SW1 and a knob operation detection switch SW2. The key insertion detection switch SW1 is constituted in such a manner as to assume an on state when a cylinder key (not shown) is completely inserted into the keyhole 14 of the cylinder lock 5. The knob operation detection switch SW2 is constituted in such a manner as to assume an on state when the cylinder lock 5 shifts in the axial direction according to a press operation of the operation knob 15. Detection information of the key insertion detection switch SW1 and the knob operation detection switch SW2 is output to a control member 50. The solenoid unit 22 includes a solenoid case 24a, a solenoid 24, and the lock lever 25, which is an engagement portion made to shift position according to whether an electrical current to the solenoid 24 is on or off. The solenoid 24 and the lock lever 25 are united by the solenoid case 24a. In this state, the solenoid unit 22 is housed in a unit housing portion 28, which is formed of an outer circumferential wall 2b of the casing body 2, and a unit housing 23 such as that shown in FIG. 4A and 4B. In addition to the solenoid unit 22, the control member 50 is also housed in the unit housing portion 28, and the unit housing 23 is secured to the casing body 2 by a bolt 26. Formed on the outer circumferential wall 2b that forms the unit housing portion 28 is an insertion hole 27. The insertion hole 27 connects the unit housing portion 28 to the parts storage compartment 2a. The lock lever 25, protruding through the insertion hole 27 into the parts storage compartment 2a, shifts position between a rotary permit position (Position indicated by a solid line in FIG. 3) when the solenoid 24 is on, and a rotary stop position(Position indicated by a broken line in FIG. 3) when the solenoid 24 is off. The rotary permit position is situated outside of the rotation path of the rotary control bar rotary control bar 7a and permits movement, the rotary stop position is situated within the rotation path of the rotary control bar 7a and stops rotation. The solenoid 24 is driven based on a control signal of the control member 50. The control member 50 operates to turn the solenoid 24 on for only a prescribed amount of time when, either, both the key insertion detection switch SW1 and the knob operation detection switch SW2 are on, or, the key insertion detection switch SW1 is off, the knob operation detection switch SW2 is on, and ID verification has succeeded as a result of communication with an electronic key (not shown).

Established thereon, and as one with the unit housing 23 is a pry-off prevention block portion 30. The pry-off prevention block portion 30 protrudes through the insertion hole 27 of the casing body 2 into the parts storage compartment 2a. Formed onto the pry-off prevention block portion 30 is a through hole 30a. The rotator 7 is housed in the parts storage compartment 2a in a state penetrating the through hole 30a. The pry-off prevention block portion 30 penetrates into the parts storage compartment 2a at a site in between the lock lever 25 and the aperture in the parts storage compartment 2a through which the cylinder lock 5 is inserted, and is constituted to prevent deep penetration of unauthorized lock breaking tools (not shown) inserted through the side having the aperture of the parts storage compartment 2a.

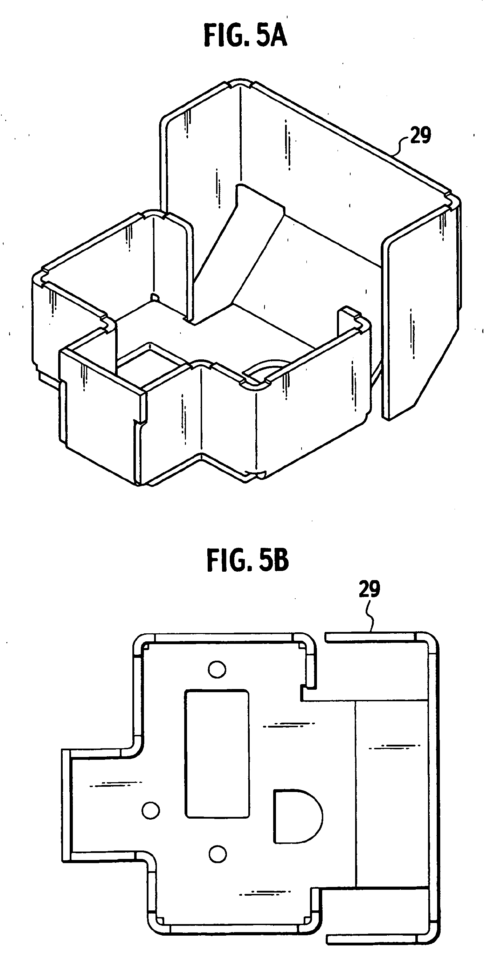

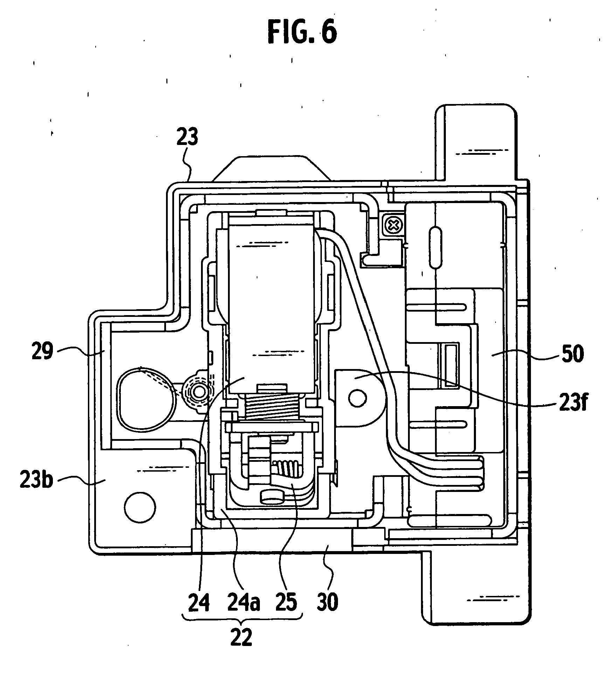

Established on the unit housing 23 is a unit cover 29 such as the one shown in FIG. 5A and FIG. 5B formed and fitted to the shape of inner surface of the unit housing 23. The unit cover 29 is formed three dimensionally, and as a singular body, out of a press processed iron plate of a prescribed thickness, strength, and rigidity. The steering lock mechanism 1A of the embodiment of the present invention, being mounted on the steering column (not shown), is not disposed at a location where the unit housing 23 is in close contact with parts (structural elements) constituting the steering column (not shown), and assumes a state facing the outside space. Because of this, the unit cover 29 is formed in such a manner as to protect the entirety of the unit housing 23. The unit cover 29 is disposed to locations excluding regions of the unit housing 23 that provide sufficient damage resistance, such as a thick region 23a of the unit housing 23, and a region 23b fixing the unit housing 23 to the casing body 2. Inside the unit housing 23 shown in FIG. 4A and FIG. 4B, the unit cover 29 shown in FIG. 5A and FIG. 5B is placed, and as shown in FIG. 6, the solenoid unit 22 is superimposed with the control member 50. Further, the unit housing 23 is superimposed onto the casing body 2 while an aperture 23d of the unit housing 23 is covered by a lid member 23c, and a screw 42 is screwed into a protruding internal thread portion 23f. The protruding internal thread portion 23f is established on a base portion 23e of the unit housing 23 and protrudes outwardly in the direction of the aperture 23d. With a constitution utilizing a means of fixing the unit cover 29 to the casing body 2 different than the means of fixing the unit housing 23 to the casing body 2, operation controlling means are protected by the unit cover 29 even if the entire unit housing 23 is stripped off according to destructive conduct, thereby further enabling improvement of theft prevention characteristics.

Action of the steering lock mechanism 1A mentioned above will now be described. In the initial state shown in FIG. 3, the key insertion detection switch SW1 and the knob operation detection switch SW2 are both off, and the lock lever 25 of the solenoid 24 lies in the rotary stop position (Position indicated by a broken line in FIG. 3). At this time, the engagement rod 9 lies in the engage position of the steering shaft (not shown), and steering (not shown) is locked. In this initial state, it is impossible for an operator to rotate the cylinder lock 5 even when applying rotary force to the operation knob 15 in an attempt to rotate the cylinder lock 5. In this initial state, if an operator presses (the first operation) the operation knob 15 without inserting a cylinder key (not shown) into the keyhole 14, the cylinder lock 5 moves through the inside of the housing case 4 in the axial direction A and the operation knob 15 is pressed down. With this movement, the knob operation detection switch SW2 switches from its off position to its on position while the key insertion detection switch SW1 maintains its off position. When the knob operation detection switch SW2 turns on, the control member 50 communicates with an electronic key (not shown) to carry out ID verification, and upon confirmation of an ID match, an electronic key operation mode takes effect. The control member 50 then brings the solenoid 24 into its on state, and the lock lever 25 is shifted into the rotary permit position (Position indicated by a solid line in FIG. 3).

Next after the above mentioned press operation (the first operation), due to rotary force applied by the operator to rotate (the second operation) the operation knob 15, the cylinder lock 5 rotates circumferentially. The rotator 7 rotates in response to this rotation of the cylinder lock 5, and the engagement rod 9 is shifted to the lock release position. This enables the steering shaft (not shown) to be rotated unhindered. In a case in which an ID match is not confirmed in the ID verification carried out through communication of the control member 50 with the electronic key (not shown), the electronic key operation mode does not take effect. Thus, the control member 50 maintains the solenoid 24 in its off state, and the lock lever 25 is maintained in the rotary stop position (Position indicated by a broken line in FIG. 3). Consequently, it is impossible at this time for an operator to rotate the cylinder lock 5 even when applying rotary force to the operation knob 15 in an attempt to rotate the cylinder lock 5. In this initial state, if an operator inserts a cylinder key (not shown) into the keyhole 14 and presses (the first operation) the operation knob 15, the cylinder lock 5 moves through the inside of the housing case 4 in the axial direction A and the operation knob 15 is pressed down. Due to the insertion of a cylinder key (not shown) into the keyhole 14, the key insertion detection switch SW1 switches from its off position to its on position. Due to the movement of the cylinder lock 5 in the axial direction A, the knob operation detection switch SW2 switches from its off position to its on position. When both the key insertion detection switch SW1 and the knob operation detection switch SW2 are both turned on, an auxiliary operation mode takes effect. The control member 50 then brings the solenoid 24 into its on state, and the lock lever 25 is shifted into the rotary permit position (Position indicated by a solid line in FIG. 3). Next after the above mentioned press operation (the first operation), due to rotary force applied by the operator to rotate (the second operation) the operation knob 15, the cylinder lock 5 rotates circumferentially. The rotator 7 rotates in response to this rotation of the cylinder lock 5, and the engagement rod 9 is shifted to the lock release position. This enables the steering shaft (not shown) to be rotated unhindered.

With the steering lock mechanism 1A of above, even in cases in which the unit housing is formed from fragile material, and is damaged by powerful shock, the solenoid unit serving as the operation controlling means can be protected due to disposal of the unit cover formed and fitted to the shape of the inner face of the unit housing. Because of this, damage resistance and thus theft prevention characteristics can be improved.

And because the unit cover is formed from a press processed iron plate, manufacturing of which can be achieved relatively inexpensively, it is possible to improve theft prevention characteristics while preventing increases in manufacturing costs.

### (Second Embodiment)

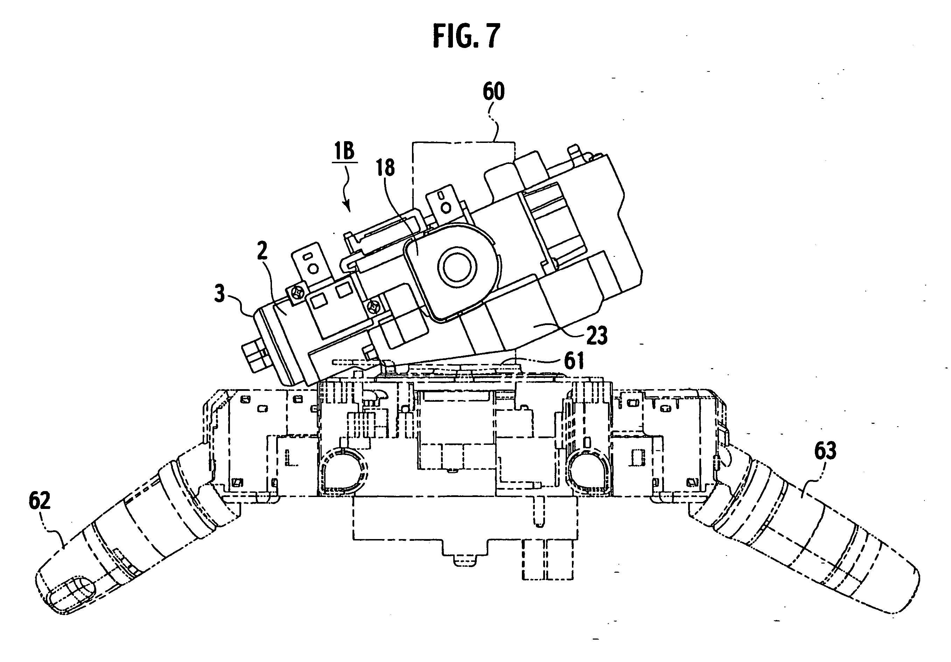

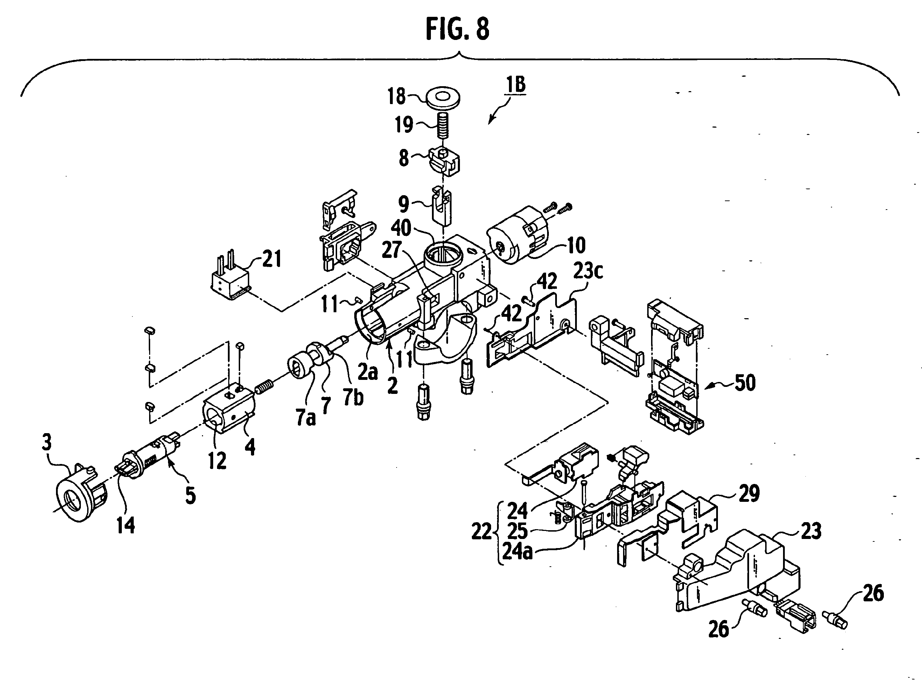

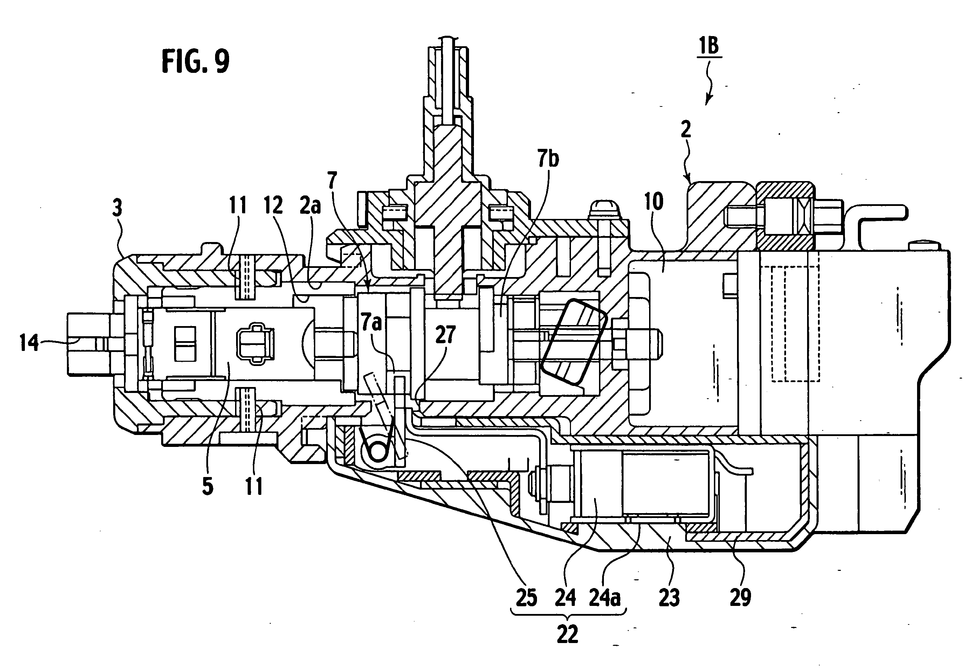

Hereinbelow will be described a second embodiment of the present invention based on the diagrams. FIG. 7 and FIG. 8 show a steering lock mechanism applied to a lock mechanism according to the second embodiment of the present invention. FIG. 7 is a view showing a state having the steering lock mechanism superimposed over a steering column. FIG. 8 is an exploded perspective view of the steering lock mechanism. FIG. 9 is a full sectioned view of the steering lock mechanism. In FIGs. 8 to 11, parts constituted identically to those of the first embodiment are indicated with identical symbols.

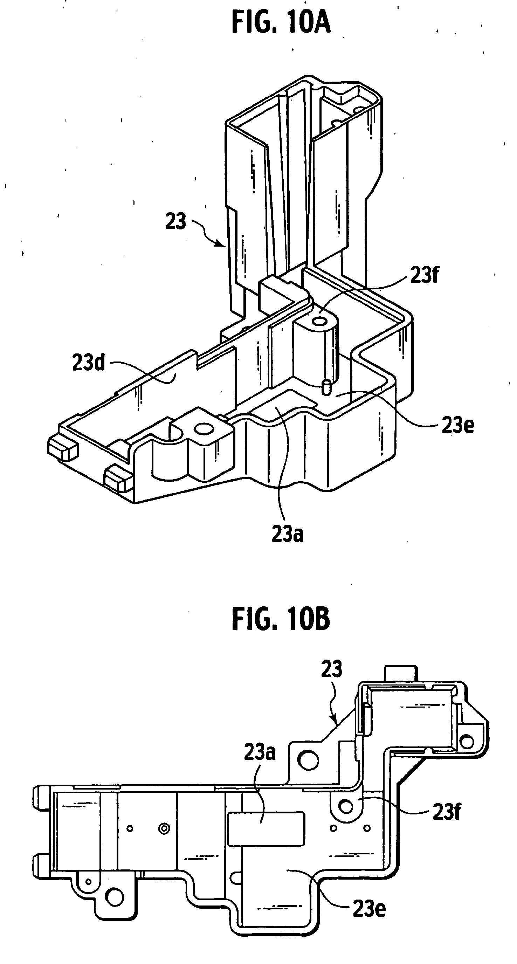

In comparison with the steering lock mechanism 1A of the first embodiment, a steering lock mechanism 1B of the second embodiment, as shown in FIG. 7, is superimposed over a specified site of a steering column 60, and a circular disk-shaped bracket portion 61 formed on the steering column 60 is disposed in such a manner as to be in close contact with the unit housing 23. Because the bracket portion 61 superimposes portions such as a winker lever 62 and a wiper lever 63, it is typically formed of a sturdy metal plate. In the same manner as in the first embodiment, the unit cover 29 is disposed to regions excluding those regions of the unit housing 23 shown in FIG. 10A and FIG. 10B that provide sufficient damage resistance, such as the thick region 23a, and the region 23b fixing the unit housing 23 to the casing body 2. In the second embodiment, because regions of the unit housing 23 in close contact with the bracket portion 61 are shielded from the outside by the bracket portion 61, which is formed from a sturdy metal plate and provides sufficient damage resistance, it is possible to omit the unit cover 29 portion mentioned above.

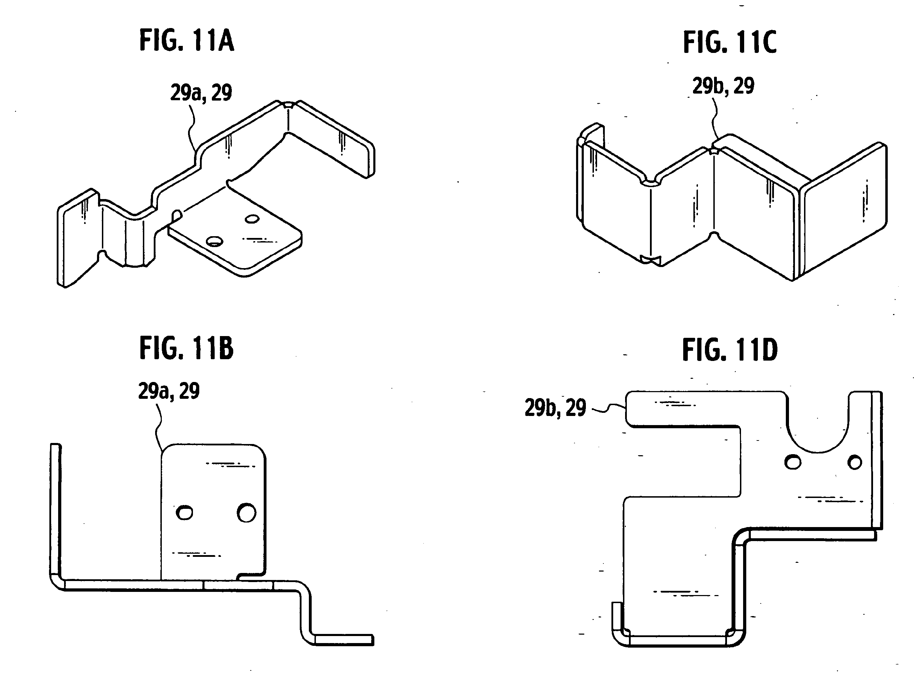

The unit cover 29 of the second embodiment, as shown in FIGs. 11A to 11D, is constituted by two components, that is, a first unit cover 29a, and a second unit cover 29b. Even if the form of the unit housing 23 is complex, it is possible to protect critical points according to constituting the unit cover 29 from multiple components.

Other constitutions are identical to those of the first embodiment, and thus description of which will be omitted herein to avoid redundancy. In the second embodiment as well, as in the first embodiment, even in cases in which the unit housing is formed from fragile material, and is damaged by powerful shock, the solenoid unit serving as the operation controlling means can be protected due to disposal of the unit cover formed and fitted to the shape of the inner face of the unit housing. Because of this, damage resistance and thus theft prevention characteristics can be improved.

And because the unit cover is formed from a press processed iron plate, manufacturing of which can be achieved relatively inexpensively, it is possible to improve theft prevention characteristics while preventing increases in manufacturing costs.

By situating the bracket portion 61 and the unit housing 23 in close contact with one another, destructive conduct cannot be executed to regions of the unit housing 23 in close contact with the bracket portion 61, which is formed from a sturdy metal plate. And by the omitting of the unit cover to regions to which destructive conduct from the outside cannot be executed, it is possible to improve theft prevention characteristics while preventing increases in manufacturing costs and weight.

In the first and second embodiments, the present invention has seen application on the steering lock mechanism 1A and the steering lock mechanism 1B, which can be unlocked according to two types of keys, that is, a mechanical cylinder key, and the electronic key. However, it is a matter of course that the present invention can also be applied to lock mechanisms (including steering lock mechanisms) having various sorts of aspects.

In the first and second embodiments, the solenoid unit was used as the operation controlling means. However, employment of constitutions using of other driving means, such as cam mechanisms used as a source of drive for motors, to move the lock lever can achieve similar effectiveness.

In the first and second embodiments, the cylinder lock 5 was used as an auxiliary lock member. However, similar effectiveness can be achieved by using an immobilizer system lock.

Although the present invention has been fully described by way of the first and second embodiments, it is to be noted that various changes and modifications will be apparent to those skilled in the art. Therefore, unless such changes and modifications depart from the scope of the claims, they should be construed as being included therein.

## Claims

1. A lock mechanism comprising:
a cylindrical casing body (2);
a unit housing portion (28) formed by an outer circumferential wall (2b) of said casing body (2) and a unit housing (23);
an insertion hole (27) located on the outer circumferential wall (2b) forming said unit housing portion, and connecting to a parts storage compartment (2a) formed inside of said casing body;
a rotor (7) supported in said parts storage compartment in a manner permitting unhindered circular movement;
a lock lever (25) established in a manner protruding from said unit housing portion through said insertion hole to said parts-storage compartment and, when in a rotary-stop position, is positioned within a rotation path of a rotary control bar (7a) provided on said rot (7) to engage said rotary control bar and, when in a rotary-permit position, is positioned outside of the rotation path of said rotary control bar to disengage said rotary control bar;
operation controlling unit (22) including said lock lever (25), house in said unit housing portion (28), and selectively moves or maintains said lock lever (25) in either said rotary-permit position or said rotary-stop position; the mechanism being **characterised by**
a unit cover (29) formed and fitted to the shape of an inner face of said unit housings (23).

2. A lock mechanism according to claim 1, wherein in a state having another structure installed at a prescribed location so as to be in close contact with said unit housing, said unit cover is disposed on the inside of a region of said unit housing facing an outside space without closely contacting said other structure.

3. A lock mechanism according to claim 1 or claim 2, wherein
said casing body is formed from die cast zinc, and
said unit cover is formed from a press processed iron plate.

## Patentansprüche

1. Schlossmechanismus, der umfasst:
einen zylindrischen Gehäusekörper (2);
einen Einheitsgehäuse-Abschnitt (28), der durch eine Außenumfangswand (2b) des Gehäusekörpers (2) und ein Einheitsgehäuse (23) gebildet wird;
ein Einführloch (27), das sich an der Außenumfangswand (2b) befindet, die den Einheitsgehäuse-Abschnitt bildet, und das mit einem Teileaufbewahrungsfach (2a) verbunden ist, das im Inneren des Gehäusekörpers ausgebildet ist;
einen Rotor (7), der in dem Teileaufbewahrungsfach so gelagert ist, dass ungehinderte Kreisbewegung möglich ist;
einen Verriegelungshebel (25), der so eingerichtet ist, dass er von dem Einheitsgehäuse-Abschnitt durch das Einführloch zu dem Teileaufbewahrungsfach vorsteht, und wenn er sich an einer Dreh-Halteposition befindet, auf einem Drehweg einer Drehsteuerstange (7a) positioniert ist, die an dem Rotor (7) vorhanden ist, um mit der Drehsteuerstange in Eingriff zu kommen, und, wenn er sich in einer Dreh-Zulassposition befindet, außerhalb des Drehweges der Drehsteuerstange positioniert ist, um Eingriff der Drehsteuerstange zu lösen;
eine Betätigungssteuereinheit (22), die den Verriegelungshebel (25) enthält und in dem Einheitsgehäuseabschnitt (28) aufgenommen ist und den Verriegelungshebel (25) selektiv bewegt oder entweder in der Dreh-Zulassposition oder der Dreh-Halteposition hält; wobei der Mechanismus **gekennzeichnet ist durch**:
eine Einheitsabdeckung (29), die geformt und an die Form einer Innenfläche des Einheitsgehäuses (23) angepasst ist.

2. Schlossmechanismus nach Anspruch 1, wobei in einem Zustand, in dem eine andere Struktur an einer vorgegebenen Position so installiert ist, dass sie in engem Kontakt mit dem Einheitsgehäuse ist, die Einheitsabdeckung an der Innenseite eines Bereiches des Einheitsgehäuses angeordnet ist, der einem äußeren Raum zugewandt ist, ohne in engen Kontakt mit der anderen Struktur zu kommen.

3. Schlossmechanismus nach Anspruch 1 oder 2, wobei
der Gehäusekörper aus Zinkdruckguss ausgebildet ist, und
die Einheitsabdeckung aus einer pressbearbeiteten Eisenplatte ausgebildet ist.

## Revendications

1. Verrou comportant :
un corps de boîtier cylindrique (2);
une partie de logement d'unité (28) formée par une paroi circonférentielle extérieure (2b) dudit corps de boîtier (2) et un logement d'unité (23);
un trou d'insertion (27) disposé sur la paroi circonférentielle extérieure (2b) formant ladite partie de logement d'unité, et se raccordant à un compartiment de stockage de pièces (2a) formé à l'intérieur dudit corps de boîtier;
un rotor (7) supporté dans ledit compartiment de stockage de pièces d'une manière permettant un mouvement circulaire sans entrave;
un levier de verrou (25) établi d'une manière qui dépasse de ladite partie de logement d'unité à travers ledit trou d'insertion jusqu'au dit compartiment de stockage de pièce et, dans une position d'arrêt de rotation, qui est positionné à l'intérieur d'une trajectoire de rotation d'une barre de commande de rotation (7a) prévue sur ledit rotor (7) afin d'engager ladite barre de commande rotative et, dans une position permettant la rotation, qui est positionné à l'extérieur de la trajectoire de rotation de ladite barre de commande rotative afin de désengager ladite barre de commande rotative;
une unité de commande d'actionnement (22) comprenant ledit levier de verrou (25), logée dans ladite partie de logement d'unité (28), et qui déplace ou maintient de manière sélective ledit levier de verrou (25) dans ladite position permettant la rotation ou bien ladite position d'arrêt de rotation, le mécanisme étant **caractérisé par** un capot d'unité (29) et ajusté à la forme d'une face intérieure dudit logement d'unité (23).

2. Verrou selon la revendication 1, dans lequel, dans un état ayant une autre structure installée dans un emplacement prescrit de façon à être en contact intime avec ledit logement d'unité, ledit capot d'unité est disposé sur l'intérieur d'une zone dudit logement d'unité face à un espace extérieur sans contact intime avec ladite autre structure.

3. Verrou selon la revendication 1 ou la revendication 2, dans lequel ledit corps de boîtier est formé en zinc moulé sous pression, et
ledit capot d'unité est formé à partir d'une plaque d'acier travaillée à la presse.
